# EUROPÄISCHE PATENTANMELDUNG

(11) **EP 4 235 320 A1**
(43) Veröffentlichungstag der Anmeldung: **30.08.2023**
(21) Anmeldenummer: 22159190.2
(22) Anmeldetag: 28.02.2022
(51) Int. Cl.: G05B 19/042, B23K 26/38, G06N 20/00

(54) **MAKRO-BASIERTE BESTIMMUNG VON BEARBEITUNGSPARAMETERN FÜR EINEN LASERBEARBEITUNGSPROZESS**

(71) Anmelder: Bystronic Laser AG, 3362 Niederönz (CH)
(72) Erfinder: HELD, Michael, 3412 Heimswil (CH); BINAGHI, Damiano, 22070 Como (IT)
(74) Vertreter: Schwarz, Claudia

(57) **Zusammenfassung**

In einem Aspekt betrifft die Erfindung ein Vorschlagswerkzeug (VW) zur Bestimmung von einer Menge von Bearbeitungsparametern zum Schneiden eines Werkstücks (W) mit einer Laserbearbeitungsmaschine (L). Das Vorschlagswerkzeug (VW) beinhaltet eine Schnittstelle (ES) zu einem Speicher (MEM), in dem eine Menge von Makros bereitgestellt oder definiert sind, die für unterschiedliche Segmente der zu schneidenden Kontur und/oder für unterschiedliche Betriebsarten der Laserbearbeitungsmaschine (L) eine Menge von aufeinander abgestimmten Bearbeitungsparametern definieren. Das Vorschlagswerkzeug (VW) beinhaltet weiterhin ein Bestimmungsmodul (BM), das ausgebildet ist zum Auszeichnen eines Basismakros aus der bereitgestellten Menge von Makros, wobei in dem Basismakro eine Menge von Werten von Basisbearbeitungsparametern bestimmt wurde, wobei die Bestimmung von Werten von Basisbearbeitungsparametern mittels einem Funktionsbaustein (FB) erfolgt, in dem eine erste Funktion implementiert ist. Weiter umfasst ist ein Prozessor (P), der zum Erfassen der bestimmten Menge von Werten der Basisbearbeitungsparameter des Basismakros bestimmt ist und, der ausgebildet ist, ein trainiertes DNN anzuwenden, um zu der erfassten bestimmten Menge von Werten der Basisbearbeitungsparameter des Basismakros als Ergebnis eine Menge von Werten der Bearbeitungsparameter für zumindest ein weiteres Makro aus der Menge von Makros zu ermitteln.

## Beschreibung

Die vorliegende Erfindung betrifft das Gebiet der Hochleistungslaserschneidtechnologie und bezieht sich insbesondere auf ein Verfahren, ein Vorschlagswerkzeug und ein Computerprogramm zur Berechnung von Bearbeitungsparametern, die für ein bestimmtes Makro, insbesondere für ein bestimmtes Bahnsegment und/oder eine bestimmte Betriebsart der Laserbearbeitungsmaschine einer zu schneidenden Kontur optimiert sind.

Die Laserbearbeitung, insbesondere das Laserschneiden, ist ein komplexer Prozess, der die Einstellung einer Vielzahl von unterschiedlichen Bearbeitungsparametern erfordert, um die gewünschte Qualität und andere Anforderungen (wie Effizienz und Robustheit) der bearbeiteten Teile zu erreichen.

Im Allgemeinen bezieht sich die Einstellung von Bearbeitungsparametern auf physikalische und/oder mechanische Parameter, die in der Regel starke Abhängigkeiten aufweisen. Daher ist die Suche nach den geeigneten Parametern eine sehr anspruchsvolle und komplexe Aufgabe. Bei Steuerungssystemen für einen Laserprozess erfordert das Testen verschiedener Kombinationen von Bearbeitungsparametern in der Regel die Durchführung eines echten Versuchs mit geschlossenem Regelkreis, was zeitaufwändig und kostspielig ist. Daher ist die Funktion zur Berechnung der Zielqualität bzw. des Zielergebnisses aus den Bearbeitungsparametern und umgekehrt in der Regel nicht bekannt oder teuer zu berechnen.

Aufgrund der physikalischen Gegebenheiten eines Laserschneidprozesses können für bestimmte Bahnsegmente einer zu schneidenden Kontur bestimmte Bearbeitungsparameter in einem sogenannten Makro zusammengefasst werden. So kann es beispielsweise ein Basismakro definiert werden, das für Geradeausschnitte oder große Konturen (bestimmte Bahnsegmente) ausgelegt ist und ein zweites Makro für Bahnsegmente, die mit gepulster Laserleistung (bestimmte Betriebsart) abgefahren werden. Ein Makro dient quasi als Abkürzung oder Zusammenfassung von Parameterkombinationen/einstellungen und dient zur Vereinfachung der Parameterbestimmung.

Im Stand der Technik sind Ansätze zur automatischen Berechnung von Bearbeitungsparametern bekannt, die auf gespeichertem (d. h. fest kodiertem) Expertenwissen und/oder auf Sensordaten basieren. So offenbart beispielsweise die US 952 9343 einen Vorschlag zur optimierten Berechnung von Schneidparametern anhand von gespeichertem Expertenwissen, Maschinensensordaten oder Bilddaten der geschnittenen Teile.

Nachteilig an diesen Ansätzen ist jedoch einerseits, dass das Expertenwissen nicht oder nicht vollständig auf leicht abweichende Kontextbedingungen, Bahnsegmente und/oder Einstellungen anwendbar und damit nicht gültig ist, wenn beispielsweise insbesondere ein anderes Makro verwendet werden soll oder muss. Damit wird das gespeicherte Expertenwissen unbrauchbar gemacht.

Es sind Verfahren bekannt, um die Bearbeitungsparameter in einem Basismakro, nämlich die Basisbearbeitungsparameter, zu optimieren, so dass ein für die jeweiligen Optimierungskriterien bestmöglicher Basisbearbeitungsparametersatz (bzw. Menge) mit einer Kombination von einzelnen aufeinander abgestimmten Bearbeitungsparametern definiert wird. Die Bestimmung des optimierten Basisbearbeitungsparametersatzes ist durch automatische oder manuelle Methoden möglich.

So ist es im Stand der Technik bekannt, neuronale Netze oder Werkzeuge der künstlichen Intelligenz einzusetzen, um optimierte Bearbeitungsparameter zu ermitteln. Beispielsweise offenbart die WO 2020/069889 einen Algorithmus zur Berechnung einer Empfehlung für optimale Bearbeitungsparameter zur Steuerung einer Laserbearbeitungsmaschine. Der Algorithmus basiert auf maschinellem Lernen, um Eingabedaten, die Materialeigenschaftsdaten und eine Zielqualität repräsentieren, zu Ausgabedaten mit einer Empfehlung für optimierte Bearbeitungsparameter, hier: Schneidparameter, zu verarbeiten.

Problematisch wird es, wenn andere Bahnsegmente und/oder abweichende Betriebsmodi der Laserbearbeitungsmaschine (z.B. gepulster oder kontinuierlicher Laserstrahl) Zur Anwendung kommen sollen. Dann sind die berechneten optimierten Bearbeitungsparameter nicht mehr gültig und können zu Mängeln im Prozessergebnis führen (z.B. geringere Qualität).

Andererseits ist es eine sehr wertvolle Information, wenn einmal optimierte Bearbeitungsparameter für einen bestimmten Laserprozess, der einem bestimmten Bahnsegment (z.B. Geradeausschnitt - Basismakro) zugeordnet sein kann, ermittelt wurden, dass diese Information bei der Berechnung von Bearbeitungsparametern für andere Bahnsegmente (andere oder "neue" Makros) berücksichtigt werden kann. "Neu" bezieht sich in diesem Zusammenhang darauf, dass kein Vorwissen oder keine Vorversuche vorhanden sind.

Ausgehend hiervon, ist es wünschenswert, wenn der bestimmte Basisbearbeitungsparametersatz für das Basismakro auch auf andere Makros übertragen werden kann, wobei dies allerdings Umrechnungen und/oder Anpassungen erfordert, da die anderen Makros ja für andere Bahnsegmente bzw. Bahnsegmentarten und/oder andere Betriebsmodi und damit für andere Schneidbedingungen definiert sind und somit eine 1:1-Übertragung zu Fehlern führen würde. Eine automatische Übertragung war bisher im Stand der Technik nicht möglich.

Es besteht daher ein Bedarf an einem Verfahren und einem Werkzeug, das in der Lage ist, auf Basis von einer Menge von Werten von Basisbearbeitungsparametern in einem Basismakro automatisch eine Menge von Werten von Bearbeitungsparametern für andere Makros (nicht das Basismakro) zu berechnen. Insbesondere soll eine Vorhersage oder Schätzung von Vorschub und/oder Laserleistung in anderen Makros unter Berücksichtigung der jeweiligen Bearbeitungsparameter zuverlässig ermöglicht werden. Die Übertragung von Einstellungen in einem Basismakro auf zumindest ein anderes Makro soll möglich sein und nicht mehr von der manuellen Ausführung durch den Anwender abhängen.

Diese Aufgabe wird durch die beigefügten unabhängigen Ansprüche gelöst. Vorteile, verbesserte Ausführungsformen und Alternativen sind in den abhängigen Ansprüchen und in der folgenden Beschreibung beschrieben.

Gemäß einem ersten Aspekt bezieht sich die vorliegende Erfindung auf ein computerimplementiertes Verfahren zur Bestimmung von einer Menge von Bearbeitungsparametern zum Schneiden eines Werkstücks mit einer Laserbearbeitungsmaschine, mit folgenden Schritten:
- Bereitstellen einer Menge von Makros, die für unterschiedliche Segmente der zu schneidenden Kontur (z.B. Geradeausschnitt oder Radien) und/oder für unterschiedliche Betriebsarten der Laserbearbeitungsmaschine (z.B. gepulster oder kontinuierlicher Laserstrahl) eine Menge von aufeinander abgestimmten Bearbeitungsparametern definieren;
- Auszeichnen eines Basismakros aus der bereitgestellten Menge von Makros, wobei sich das Basismakro dadurch kennzeichnet, dass mittels einer ersten Funktion eine Menge von Werten von Basisbearbeitungsparametern bestimmt wurden;
- Erfassen der bestimmten Menge von Werten der Basisbearbeitungsparameter des Basismakros;
- Anwenden eines trainierten tiefen neuronalen Netzwerkes (deep neural network, DNN, um zu der erfassten bestimmten Menge von Werten der Basisbearbeitungsparameter des Basismakros als Ergebnis eine Menge von Werten der Bearbeitungsparameter für zumindest ein weiteres Makro aus der Menge der Makros zu ermitteln.

Das Ergebnis des DNN ist somit ein Vorschlag für die Übertragung von Bearbeitungsparameterwerten des Basismakros auf ein oder mehrere andere Makros. Das Ergebnis ist insbesondere eine Menge von Werten von Bearbeitungsparametern für zumindest ein weiteres Makro. Der Vorschlag bzw. das Ergebnis kann auf einer Schnittstelle (HMI, human machine interface) ausgegeben werden. Das Ergebnis mit dem Vorschlag kann dann zur automatischen Umsetzung angenommen oder verworfen und/oder verändert werden.

Das Basismakro zeichnet sich dadurch aus, dass an dessen Basisbearbeitungsparametern Einstellungen, Anpassungen und/oder Optimierungen vorgenommen werden können. Hier ist es auch möglich, Versuche zu fahren, um das Arbeitsergebnis (z.B. Schnittgüte), das mit den jeweiligen Basisbearbeitungsparametern erwirkt wurde, zu bewerten.

Die Bestimmung von Basisbearbeitungsparametern in dem Basismakro kann z.B. mittels Basisparametertuning, wie beispielsweise in der EP 20196972.2 beschrieben, und/oder manuell und/oder durch elektronisches Einlesen von Parameterwerten aus einer Datei erfolgen.

Es ist möglich oder kann konfiguriert sein, dass die Bearbeitungsparameter des Basismakros mit den Bearbeitungsparametern des zumindest einen weiteren Makros übereinstimmen.

Alternativ ist es möglich oder kann konfiguriert sein, dass die Bearbeitungsparameter des zumindest einen weiteren Makros eine Teilmenge der Bearbeitungsparameter des Basismakros sind. Wenn z.B. das Basismakro so bestimmt ist, dass es Parameter zur Spezifikation eines Pulses der Laserleistung beinhaltet, so kann es sein, dass das weitere Makro ein solches ist, das mit kontinuierlicher Laserleistung arbeitet und von daher die Spezifikation des Pulses nicht erforderlich ist.

In einer weiteren vorteilhaften Ausführungsform der Erfindung können die Bearbeitungsparameter und/oder die Basisbearbeitungsparameter materialbezogene und/oder laserbearbeitungsmaschinenbezogenen Parameter umfassen und/oder ausgewählt sein aus der Gruppe, bestehend aus: Materialdicke, Materialtyp, Düsenart, Düsendurchmesser, Gasart, Düsenabstand, Magnifikation/Raster, Pulsfrequenz, Pulsbreite, Fokuslage, Gasdruck, Vorschub und Laserleistung. Die Bearbeitungsparameter und/oder die Basisbearbeitungsparameter können auch eine Auswahl oder Kombination der vorstehend genannten Kennzeichnungen sein.

In einer weiteren vorteilhaften Ausführungsform der Erfindung kann durch Anwenden der ersten Funktion, mehr als ein Wert für mehr als einen Basisbearbeitungsparameter bestimmt werden. Es ist auch möglich, Inkonsistenzen zwischen den bestimmten Werten der Basisbearbeitungsparameter und/oder der (ermittelten) Bearbeitungsparameter automatisch zu detektieren und optional auf einer Benutzeroberfläche zu repräsentieren, um ggf. Gegenmaßnahmen einzuleiten.

In einer weiteren bevorzugten Ausführungsform der Erfindung wird die - als Ergebnis der Anwendung des DNN - ermittelte Menge von Werten der Bearbeitungsparameter für zumindest ein weiteres Makro mit einem Konsistenzprüfalgorithmus auf Konsistenz geprüft. Alternativ oder kumulativ können gegebenenfalls etwaige Inkonsistenzen zwischen den Werten der Bearbeitungsparameter für das zumindest ein weiteres Makro automatisch detektiert und optional auf einer Benutzeroberfläche (HMI) repräsentiert werden. Es kann ein Vorschlag zur Kompensation der detektierten Inkonsistenzen ausgegeben werden. Dieser Vorschlag kann durch eine Eingabe auf einem Eingabefeld auf dem HMI verifiziert oder verworfen werden.

Grundsätzlich sind die Bearbeitungsparameter und/oder Basisbearbeitungsparameter, die in einem Makro zusammengefasst sind, aufeinander abgestimmt. Beispielsweise gibt es eine Reihe von physikalisch bedingten Zusammenhängen zwischen den Bearbeitungsparametern und/oder den Basisbearbeitungsparametern, die bei der Definition eines Makros berücksichtigt sind. Da z.B. die Linsenposition mit dem Düsenabstand gekoppelt ist, ändert sich die Linsenposition, wenn z.B. der Düsenabstand angepasst wird. Es wird versucht, Linsenbewegungen beim Übergang zwischen den Makrotypen zu minimieren, indem Änderungen von Fokuslage und Düsenabstand aufeinander abgestimmt werden. Ein weiteres Beispiel ist die Abhängigkeit der Gaseinkopplung von Düsenabstand, so wird mit abnehmendem Düsenabstand das Gas besser in den Schnittspalt eingekoppelt. Beim Einstechen wird mit relativ großen Düsenabständen und tiefen Drücken gearbeitet, wohingegen beim Schneiden teilweise hohe Drücke verwendet werden. Ein direktes Umschalten zwischen den Gasdrücken würde den Schneidprozess unnötig destabilisieren, weshalb man für gewöhnlich Gasrampen einsetzt, um einen fließenden Übergang zwischen den Makrotypen zu erreichen.

In einer weiteren vorteilhaften Ausführungsform der Erfindung kann die erste Funktion ein automatisches Basisparametertuning, wie beispielsweise in der EP 20196972.2 beschrieben, ein datengetriebenes Verfahren, ein Erfassen von Eingaben auf einer HMI und/oder ein Anwenden eines physikalischen Modells umfassen.

In einer weiteren vorteilhaften Ausführungsform der Erfindung kann das DNN ein feed forward DNN sein, das zur Lösung eines Regressionsproblems mit mindestens zwei Ausgangsvariablen bestimmt ist. Die zumindest zwei Ausgangsvariablen können sich auf zumindest zwei "andere" Markos als das Basismakro (insbesondere auf ein erstes Makro für mittlere bis kleine Konturen und ein zweites Makro das als Pulsmakro ausgebildet sein kann) beziehen. Insbesondere kann die Architektur des DNN so gewählt sein, dass das bereitgestellte Ergebnis möglichst robust ist. In einem Beispiel kann das DNN drei Schichten (Layer) aufweisen mit 100, 80 bzw. 4 versteckten Knoten. Die Eingabeschicht kann ausgelegt sein, neunzehn (19) Werte, insbesondere für die Basisbearbeitungsparameter als Eingabe einzulesen und die Ausgabeschicht kann ausgelegt sein, vier (4) Werte, insbesondere für Vorschub (des Laserschneidkopfes) und Laserleistung der beiden anderen Makros, als Ausgabe auszugeben. Die Aktivierungsfunktion kann als Relu Funktion implementiert sein.

Die Trainingsdaten des DNN beinhalten Werte der Bearbeitungsparameter, die auf Basis von bisherigen Versuchen (z.B. von Experten) als gut befunden wurden (Expertenwissen), ausgewählt aus einer Gruppe, bestehend aus:
- Materilaldicke,
- Materialart/typ,
- installierte Laserleistung
- Gastyp,
- Düsenart,
- Düsendurchmesser und
- Angaben zum Makrotyp (z.B. CW, erstes oder zweites Makro).

In einer weiteren vorteilhaften Ausführungsform der Erfindung kann das Auszeichnen des Basismakros in Abhängigkeit von einer Konturgröße, insbesondere eines Krümmungsradius, und/oder einer Materialart und/oder einer Materialdicke erfolgen. Es ist weiterhin möglich, dass das Auszeichnen vollautomatisch erfolgt.

In einer weiteren vorteilhaften Ausführungsform der Erfindung kann die bereitgestellte Menge von Makros folgende Makros beinhalten:
- Ein Basismakro für Segmente der Kontur, die überwiegend einen Geradeausschnitt oder große Radien umfassen und mit kontinuierlicher Laserleistung abgefahren werden;
- Ein erstes Makro für Segmente der Kontur, die überwiegend mittlere bis kleine Radien (z.B. im Bereich zwischen 7mm bis 15mm, insbesondere zwischen 8mm und 13 mm) umfassen und/oder
- Ein zweites Makro, insbesondere ein Pulsmakro, für Segmente der Kontur, die kleinste Radien (z.B. im Bereich von 4mm bis 10mm, insbesondere zwischen 5mm und 8mm) umfassen und/oder mit gepulster Laserleistung abgefahren werden, damit Verbrennungen vermieden werden.

Die Zuweisung der Makroarten zu bestimmten Bahnsegmenten erfolgt anhand eines definierten Regelwerkes, das teilweise auf Erfahrungswissen basiert. Das Erfahrungswissen ist in digitaler Form codiert. Das Erfahrungswissen beinhaltet z.B. die Regel: Bei 20mm Baustahl werden Radien zwischen 8mm und 13mm mit einem ersten Makro (Makro 1) und Radien zwischen 5mm und 8mm gepulst geschnitten. Radien über 13mm werden mit einem CW-Makro (Basismakro) geschnitten und Radien unterhalb 5mm versucht man zu vermeiden.

In einer bevorzugten Ausführungsform der Erfindung kann die Mensch-Maschine-Schnittstelle, HMI, Felder aufweisen, die dazu bestimmt sind, ein weiteres Makro, neben dem ersten und zweiten Makro zu definieren, um Schneidprozesseinstellungen für weitere Zeitphasen und/oder Bahnsegmente und/oder Materialeigenschaften zu definieren (z.B. für sehr dickes oder dünnes Blech oder für bestimmte Schneidphasen, wie Anschnitt, Einstechen etc.). Das neu definierte Makro kann dann für zukünftige Übertragungsvorgänge berücksichtigt werden. In diesem Fall muss das DNN erweitert werden. Die Ausgänge der Ausgabeschicht müssen für die zumindest zwei Parameter (Vorschub und Laserleistung) des neuen Makros erweitert werden.

In einer weiteren bevorzugten Ausführungsform der Erfindung kann das Ergebnis des DNN mit der ermittelten Menge von Werten der Bearbeitungsparameter für zumindest ein weiteres Makro einem Referenzprüfalgorithmus zugeführt werden. Der Referenzprüfalgorithmus ist dazu ausgebildet, das Ergebnis mit einer Menge von Referenzangaben auf Übereinstimmung zu vergleichen. Die Referenzangaben können z.B. durch Erfahrungswissen des Anwenders bereitgestellt werden. Die Referenzangaben können von gespeicherten Vergleichsfällen bzw. Referenzfällen stammen und aus einer Datei oder einem Speicherort eingelesen werden. Die Referenzprüfalgorithmus kann z.B. ausgelegt sein, Ausreißer herauszufiltern.

In einer weiteren bevorzugten Ausführungsform der Erfindung kann eine Selektionsfunktion angewendet werden, so dass das Ergebnis der DNN-Anwendung nicht für alle Bearbeitungsparameter des zumindest ein weiteres Makros (aus der Menge von Makros) vorliegt, sondern nur für ausgewählte relevante Bearbeitungsparameter, um das Training und die Inferenz beschleunigen zu können. Beispielsweise kann die Selektionsfunktion so konfiguriert sein, dass nur der Vorschub und die Laserleistung als Bearbeitungsparameter berücksichtigt und Werte für diese beiden Bearbeitungsparameter ermittelt werden.

In einer weiteren bevorzugten Ausführungsform der Erfindung kann eine Vorverarbeitungsstufe angewendet werden. Die Vorverarbeitungsstufe dient dazu, die Daten, die dem DNN zugeführt werden, vor zu verarbeiten. Insbesondere kann die Menge von Werten von Basisbearbeitungsparametern einer algorithmischen Vorverarbeitung unterzogen werden. Die Vorverarbeitung kann eine Konsistenzprüfung und/oder eine Plausibilitätsprüfung umfassen. Dies verhindert, dass das DNN sozusagen auf fehlerhafte oder ungünstige Eingaben angewendet wird. Damit kann die Qualität der Schätzung der Übertragungsfunktion (Einstellungen/Basismakro -> Einstellungen/zumindest ein weiteres Makro) verbessert werden.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Vorrichtung (Vorschlagswerkzeug), ein Laserschneidsystem oder auf ein Computerprogrammprodukt gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend im Zusammenhang mit dem Verfahren beschriebenen bevorzugten Ausführungsform der Erfindung werden nicht explizit für die Vorrichtung wiederholt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Erfassen der bestimmten Menge von Werten der Basisbearbeitungsparameter" mit einer zweiten Schnittstelle und entsprechenden Anweisungen zum Erfassen von Daten durchgeführt werden. Um Redundanz zu vermeiden, wird die Vorrichtung deshalb nicht noch einmal explizit beschrieben, obwohl es auch in den alternativen Ausführungsformen, die in Bezug auf das Verfahren beschrieben sind, verwendet werden kann. Es sei insbesondere darauf hingewiesen, dass die vorrichtungsbezogene Umsetzung der Erfindung, z.B. mit dem Vorschlagswerkzeug, auch mit den Merkmalen weitergebildet sein kann, die im Zusammenhang mit dem Verfahren beschrieben oder beansprucht worden sind.

In einem weiteren Aspekt betrifft die Erfindung ein Vorschlagswerkzeug, das als elektronische Vorrichtung bzw. Hardware Implementierung ausgebildet sein kann und zur Bestimmung von einer Menge von Bearbeitungsparametern zum Schneiden eines Werkstücks mit einer Laserbearbeitungsmaschine bestimmt ist, mit folgenden Bauteilen:
- Einer Schnittstelle zu einem Speicher zum Bereitstellen oder Definieren einer Menge von Makros, die für unterschiedliche Segmente der zu schneidenden Kontur und/oder für unterschiedliche Betriebsarten der Laserbearbeitungsmaschine eine Menge von aufeinander abgestimmten Bearbeitungsparametern definieren;
- Einem Bestimmungsmodul, das ausgebildet ist zum Auszeichnen eines Basismakros aus der bereitgestellten Menge von Makros, wobei in dem Basismakro eine Menge von Werten von Basisbearbeitungsparametern bestimmt wurde, wobei die Bestimmung von Werten von Basisbearbeitungsparametern mittels einem Funktionsbaustein erfolgt, in dem eine erste Funktion implementiert ist;
- Einem Prozessor, der zum Erfassen der bestimmten Menge von Werten der Basisbearbeitungsparameter des Basismakros bestimmt ist;
- wobei der Prozessor ausgebildet ist, ein trainiertes DNN anzuwenden, um zu der erfassten bestimmten Menge von Werten der Basisbearbeitungsparameter des Basismakros als Ergebnis eine Menge von Werten der Bearbeitungsparameter für zumindest ein weiteres Makro aus der Menge von Makros zu ermitteln.

Das Vorschlagwerkzeug kann eine Ausgabeschnittstelle zur Ausgabe (z.B. Anzeige) der ermittelten Menge von Werten der Bearbeitungsparameter für zumindest ein weiteres Makro umfassen.

Das Vorschlagwerkzeug dient zur Ausführung des vorstehend beschriebenen Verfahrens. Das Vorschlagwerkzeug dient insbesondere zum Übertragen von Werten, die in dem Basismakro gesetzt oder definiert wurden auf andere Makros. Das Übertragen umfasst das Anpassen und Ändern von ersten Werten von Basisbearbeitungsparametern in dem Basismakro und ein Beibehalten von zweiten Werten von Basisbearbeitungsparametern in dem Basismakro. Mit anderen Worten müssen also einige Parameter geändert werden und andere bleiben unverändert. Geändert werden vorzugsweise der Vorschub und/oder die Laserleistung. Andere Parameter können konstant bleiben.

Üblicherweise werden die Werte in einem CW-Makro optimiert, das für Geradeausschnitte oder große Konturen ausgelegt ist. Da jedoch ein Schneidplan meist nicht nur aus geraden Linien oder großen Konturen besteht, müssen auch die Parametereinstellungen der anderen Makros (z.B. erstes Makro, zweites Makro) auf Basis der Einstellungen in dem Basismakro angepasst werden. Dies ist sehr zeitaufwendig und überfordert viele Maschinenbediener.

Deshalb wird erfindungsgemäß ein DNN verwendet, um die Werte für die Vorschubgeschwindigkeit, Laserleistung für die anderen Makros vorherzusagen.

In einem weiteren Aspekt betrifft die Erfindung ein Laserschneidsystem mit einer Laserbearbeitungsmaschine, insbesondere einer Laserschneidmaschine, und einem Vorschlagswerkzeug, wie vorstehend beschrieben.

In einem weiteren Aspekt betrifft die Erfindung ein Computerprogramm, umfassend Befehle, die bei der Ausführung des Computerprogramms durch einen Computer diesen veranlassen, das Verfahren, wie vorstehend beschrieben, auszuführen. Dabei ist es auch möglich, dass das Computerprogramm auf einem von einem Computer lesbaren Medium gespeichert ist.

Bei der Laserbearbeitungsmaschine handelt es sich vorzugsweise um eine Laserschneidmaschine. Die Laserschneidmaschine kann zum Schneiden von Werkstücken, insbesondere von flächigen Werkstücken aus Metall ausgebildet sein.

Der Laserprozess und insbesondere das Laserschneiden kann vorzugsweise ein Hochleistungslaserprozess sein und die Prozessparameter sind dementsprechend Schneidparameter für den Schneidprozess. Das vorgeschlagene Verfahren kann jedoch auch auf andere Arten von Laserverfahren angewandt werden, z. B. auf solche mit geringerer Leistung, wie z. B. Gravierverfahren.

Bearbeitungsparameter und/oder Basisbearbeitungsparameter sind physikalische oder technische Parameter, die den Laserprozess charakterisieren. Die Bearbeitungsparameter können Vorschub/Geschwindigkeit des Laserkopfes, Laserleistung, Fokusposition, Gasdruck, Gasdruck, Düsentyp bzw. Düsendurchmesser, Düsenabstand usw. umfassen, sich aber auch auf die mechanischen Aktoren und Antriebe für den Laserkopf und erforderliche Komponenten der Lasermaschine beziehen. Die Bearbeitungsparameter können also auch die Parameter der Lasermaschine umfassen.

Ein Makro ist eine Zusammenfassung von aufeinander abgestimmten Bearbeitungsparametern. "Aufeinander abgestimmt" bedeutet, dass die Bearbeitungsparameter in sich konsistent sind. Die in einem Makro zusammengefassten Bearbeitungsparameter umfassen keine konfligierenden Einstellungen. In einem Makro können z.B. die Bearbeitungsparameter "Laserleistung" und "Vorschub" definiert werden. Das Aufeinanderabgestimmtsein der Bearbeitungsparameter bedeutet nun beispielsweise, dass nicht die Laserleistung reduziert und gleichzeitig der Vorschub gesteigert werden kann, weil dies unweigerlich zu einem Strahlabriss führen würde, weil die eingebrachte Streckenenergie nicht mehr zum Schmelzen des Materials ausreicht. Eine solche Konfiguration der Bearbeitungsparameter (wenn z.B. manuell eingegeben) wäre dann unzulässig und könnte nicht in einem Makro definiert werden. Werden die Bearbeitungsparameter automatisch bestimmt, so werden diese wechselseitigen Abhängigkeiten algorithmisch berücksichtigt.

Ein Makro dient zur schnelleren und einfacheren Bedienung der Maschine. Ein Makro kann z.B. für bestimmte Typen von Bahnsegmenten und/oder bestimmten Betriebsarten der Laserschneidmaschine ausgebildet oder definiert sein. In dem Makro sind die darin enthaltenden Bearbeitungsparameter bereits gesetzt. Der Anwender muss sich nicht mehr um deren Bestimmung bemühen. Dies erleichtert die Bedienung der Maschine deutlich.

Die Wahl des Makrotyps hängt von der Blechdicke und/oder der zu schneidenden Konturgröße ab. Der Makrotyp kann mit einer automatisch ausgeführten Methode bestimmt werden. Normalerweise wird der Makrotyp in einer Computer Aided Manufacturing Software (z.B. BySoft, CAM) automatisch eingestellt.

Ein Basismakro beinhaltet Basisbearbeitungsparameter und ist ein Makro, in dem typischerweise Anpassungen und/oder Optimierungen der Basisbearbeitungsparameter vorgenommen werden. In der Regel handelt es sich bei dem Basismakro um das sogenannte CW-Makro (CW: continious wave, kontinuierlicher Laserleistung). Dieses CW-Makro wird überwiegend für Geradeausschnitt-Bahnsegmente oder Bahnsegmente mit großen Radien angewendet.

Die Anpassungen und/oder Optimierungen der Basisbearbeitungsparameter können manuell über Felder auf einem HMI erfasst werden. Alternativ oder kumulativ können diese automatisch in einem Hintergrundprozess erfolgen; im letzteren Fall läuft der Prozess für die Anpassungen und/oder Optimierungen der Basisbearbeitungsparameter für den Anwender unbemerkt ab.

Trainingsdaten zum Trainieren des DNN umfassen die Werte der Basisbearbeitungsparameter und zugeordnete Werte von Bearbeitungsparametern von den anderen Makros, die z.B. aus Erfahrung oder aufgrund von Versuchen als optimal bestimmt worden sind. So haben Schneidexperten beispielsweise empirisch ermittelt, dass große Konturen in Baustahl 6mm mit 10kW Laserleistung mit einem Vorschub von 11.7m/min geschnitten werden können. Für mittlere bis kleine Radien wird die Leistung auf 7.5kW reduziert. Dadurch reduziert sich der Vorschub auf 5.85m/min. Für die kleinsten Radien wird die Laserleistung gar auf 6kW und der Vorschub auf 4.1m/min reduziert. Zu diesem Set gibt es weiter die Einstellung der Fokuslage (2.5mm), Gasdruck (6.5bar), Pulsfrequenz (399 Hz) und Pulsbreite (2185µs). Diese vier vorgenannten Werte bleiben in diesem Beispiel in allen 3 Makros (CW, erstes Makro/mittlere bis kleine Radien und zweites Makro/kleinste Radien) konstant.

Die Trainingsdaten enthalten nun für jedes Material (Baustahl, Edelstahl, verzinktes Blech, Aluminium, Messing etc.), in jeder Dicke (1mm, 1.5mm, 2mm, ... 30mm) und für jede verfügbare Laserleistung (z.B. 3kW, 4kW, 6kW, 8kW, 10kW, 12kW 15kW) einen Eintrag für die oben exemplarisch genannten Werte.

In der folgenden detaillierten Figurenbeschreibung werden nicht einschränkend zu verstehende Ausführungsbeispiele mit deren Merkmalen und weiteren Vorteilen anhand der Zeichnung besprochen.

### KURZE BESCHREIBUNG DER FIGUREN

Fig. 1 ein Ablaufdiagramm eines Verfahrens gemäß einer bevorzugten Ausführungsform der Erfindung und mit optionalen Verfahrensschritten;
Fig. 2 ein Blockschaltbild eines Vorschlagswerkzeugs gemäß einer bevorzugten Ausführungsform der Erfindung; und
Fig. 3 ein Diagramm, das die Bestimmung eines Makrotyps repräsentiert;
Fig. 4 eine schematische Ansicht einer Laserschneidmaschine mit einem angeschlossenen Vorschlagswerkzeug.

### BESCHREIBUNG VON AUSFÜHRUNGSBEISPIELEN ANHAND DER FIGUREN

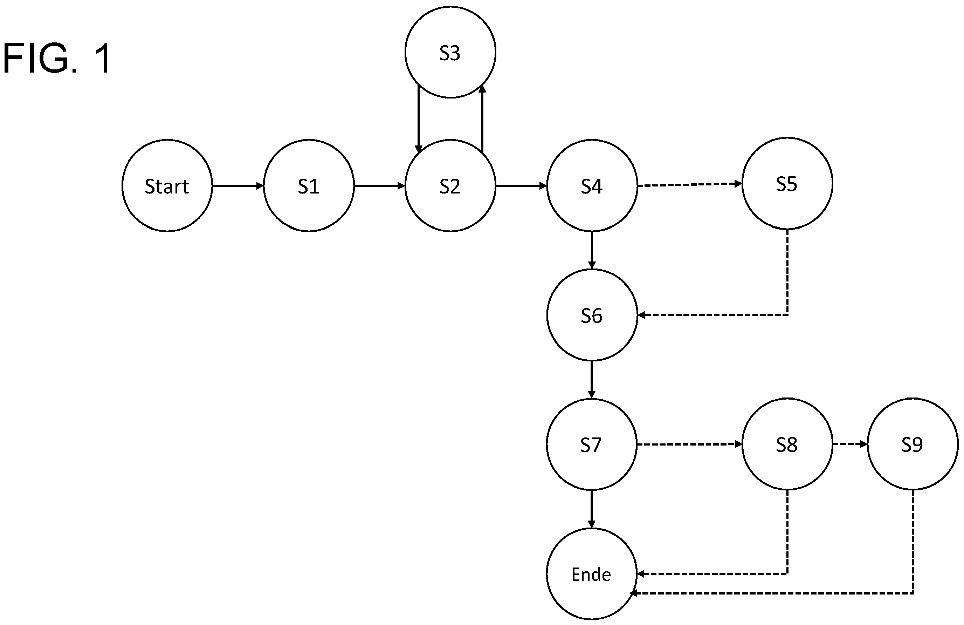

Im Folgenden wird unter Bezugnahme auf **Fig. 1** der Ablauf eines Verfahrens zum Übertragen von Werten von Basisbearbeitungsparametern in einem Basismakro auf ein (oder mehrere) weitere(s) Makro(s) beschrieben.

Nach dem Start des Verfahrens wird in Verfahrensschritt S1 einer Menge von Makros bereitgestellt, die für unterschiedliche Segmente der zu schneidenden Kontur und/oder für unterschiedliche Betriebsarten einer Laserbearbeitungsmaschine L eine Menge von aufeinander abgestimmten Bearbeitungsparametern definieren.

In Schritt S2 erfolgt ein Auszeichnen eines Basismakros aus der bereitgestellten Menge von Makros. Es wird dasjenige Makro als Basismakro bestimmt, in welchen mittels einer ersten Funktion S3 eine Menge von Werten von Basisbearbeitungsparametern bestimmt wurden. Dies kann z.B. mittels Verfahren zum Parametertuning erfolgen.

In Schritt S4 erfolgt ein Erfassen der bestimmten Menge von Werten der Basisbearbeitungsparameter des Basismakros.

Optional und deshalb in Fig. 1 gestrichelt dargestellt, kann in einem Schritt S5 ein Triggersignal erfasst werden, das dazu dient, den Übertragungsvorgang auf ein anders Makro (Schritt S6) auszulösen. Dies hat den Vorteil, dass die nachfolgende Anwendung des DNN auch nur dann getriggert wird, wenn tatsächlich die Basisbearbeitungsparameter des Basismakros auf ein anderes Makro oder mehrere andere Makros übertragen werden sollen, denn es kann ja durchaus ein Schneidplan eingelesen sein, der definiert, dass alle zu schneidenden Konturen ausschließlich mit dem Basismakro bearbeitet werden sollen. Dann wäre eine Übertragung nicht erforderlich.

In Schritt S6 wird ein neuronales Netzwerk, insbesondere ein DNN, auf die in Schritt S4 erfasste bestimmte Menge von Werten der Basisbearbeitungsparameter des Basismakros angewendet.

Nach Anwendung des DNN kann dieses als Ergebnis in Schritt S7 eine ermittelte Menge von Werten der Bearbeitungsparameter für zumindest ein weiteres Makro bereitgestellt und/oder ausgegeben werden.

Danach kann ein Verifikationssignal in Schritt S8 erfasst werden, um das ermittelte Ergebnis mit der Menge von Werten der Bearbeitungsparameter für zumindest ein weiteres Makro, z.B. auf einer Mensch-Maschine Schnittstelle HMI auszugeben, um dem Anwender die Möglichkeit zu geben den Vorschlag zu akzeptieren/verifizieren, so dass die anderen Makros mit dem vorgeschlagenen Werten "bestückt" werden oder den Vorschlag zu verwerfen.

Kumulativ oder alternativ kann in einem Schritt S9 ein Konsistenzprüfalgorithmus ausgeführt werden, der dazu bestimmt ist, automatisch etwaige Inkonsistenzen in der (in Schritt S7) ermittelten Menge von Werten der Bearbeitungsparameter für zumindest ein weiteres Makro zu detektieren. Das Ergebnis des Konsistenzprüfalgorithmus kann zumindest im Falle einer Detektion von Inkonsistenzen auf der Mensch-Maschine Schnittstelle HMI ausgegeben werden. In einer vorteilhaften Ausführungsform der Erfindung kann der Schritt S9 auch vor dem Schritt der Verifikation S8 ausgeführt werden. Auch ist es möglich, den Verifikationsschritt S8 mehrfach und insbesondere auch nach Ausführung des Konsistenzprüfalgorithmus (S9) auszuführen.

Des Weiteren können weitere algorithmische Vor- und Nachverarbeitungsfunktionen (Selektionsfunktion, Referenzprüfalgorithmus, Vorverarbeitungsstufe etc.) angewendet werden, die in der allgemeinen Beschreibung bereits beschrieben wurden und hier nicht nochmals wiederholt werden.

Anschließend kann das Verfahren enden oder wiederholt, z.B. für andere Makros, ausgeführt werden.

Das Verfahren ist vollständig computer-implementiert.

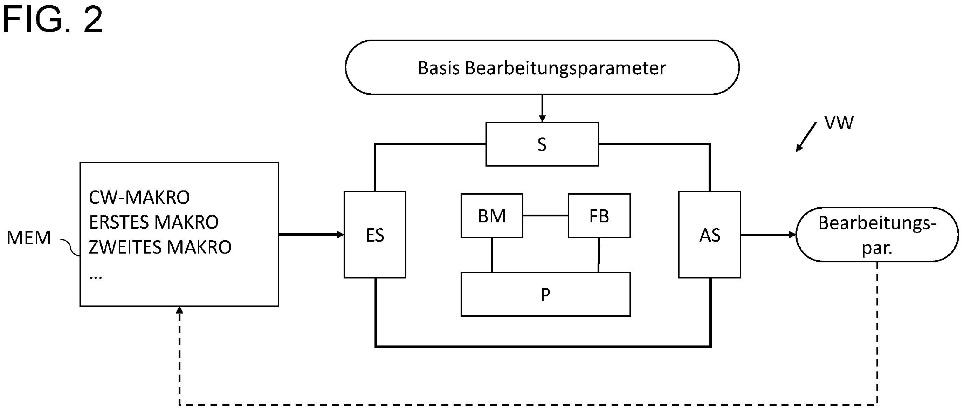

**Fig. 2** zeigt ein Blockschaltbild von Bauteilen eines Vorschlagswerkzeugs VW, das zur Ausführung des oben beschriebenen Verfahrens bestimmt ist.

Das Vorschlagswerkzeug VW ist ein elektronisches Bauteil. Das Vorschlagswerkzeug VW kann Bestandteil einer übergeordneten Steuerung SE sein, die z.B. als CNC (computerized numerical control, CNC), als NC (numerical control) und/oder als SPS (speicherprogrammierbare Steuerung, SPS) ausgebildet sein kann.

Das Vorschlagswerkzeug VW umfasst eine Schnittstelle ES zu einem Speicher MEM, in dem eine Menge von Makros bereitgestellt oder definiert sind, die für unterschiedliche Segmente der zu schneidenden Kontur und/oder für unterschiedliche Betriebsarten der Laserbearbeitungsmaschine L eine Menge von aufeinander abgestimmten Bearbeitungsparametern definieren.

Das Vorschlagswerkzeug VW beinhaltet weiterhin ein Bestimmungsmodul BM. Das Bestimmungsmodul BM ist ausgebildet zum Auszeichnen eines Basismakros aus der bereitgestellten Menge von Makros. Es wird das Makro als Basismakro ausgezeichnet, in dem eine Menge von Werten von Basisbearbeitungsparametern bestimmt wurde. Die Bestimmung von Werten von Basisbearbeitungsparametern kann mittels einem Funktionsbaustein FB ausgeführt werden. In dem Funktionsbaustein FB ist eine erste Funktion implementiert. Alternativ kann die Bestimmung von Werten von Basisbearbeitungsparametern anderweitig, z.B. manuell durch Eingabe von Basisbearbeitungsparametern auf einem HMI erfolgen, die über eine weitere Schnittstelle S erfasst und von dem Vorschlagswerkzeug VW eingelesen werden.

Das Vorschlagswerkzeug VW beinhaltet weiterhin einen Prozessor P, der zum Erfassen der bestimmten Menge von Werten der Basisbearbeitungsparameter des Basismakros von dem Bestimmungsmodul BM bestimmt ist.

Der Prozessor P ist darüber hinaus ausgebildet, ein trainiertes DNN anzuwenden, um zu der erfassten bestimmten Menge von Werten der Basisbearbeitungsparameter des Basismakros eine Menge von Werten der Bearbeitungsparameter für zumindest ein weiteres Makro aus der Menge von Makros zu ermitteln. Die ermittelte Menge von Werten der Bearbeitungsparameter für zumindest ein weiteres Makro ist das Ergebnis des DNN und kann auf einer Ausgabeschnittstelle AS bereitgestellt und/oder ausgegeben werden.

Das Ergebnis mit der Menge von Werten der Bearbeitungsparameter für "andere" Makros kann in dem Speicher MEM gespeichert werden.

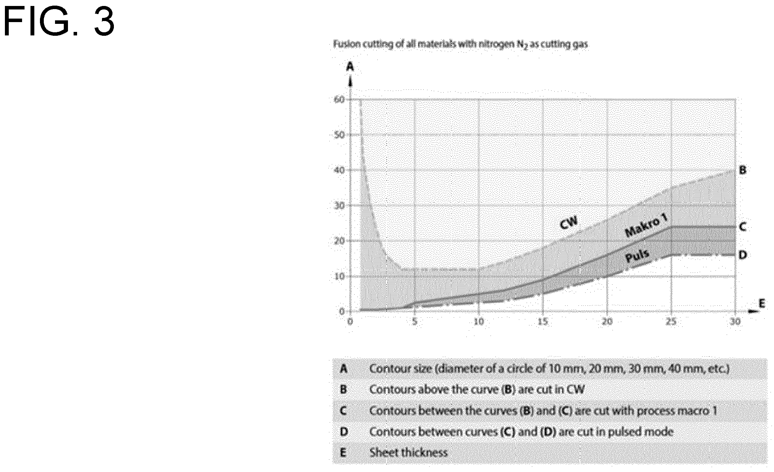

**Fig. 3** zeigt eine Grafik zur Bestimmung von Makros in Abhängigkeit von der Materialdicke und/oder der Konturgröße bzw. der Durchmesser des jeweiligen Radius der Kontur (z.B. kleiner Radius in engen Ecken). Die Auswahl eines Makros erfolgt software-gesteuert. Wie aus Fig. 3 ersichtlich, hängt die Wahl des Makrotyps von der Blechdicke und der zu schneidenden Konturgröße ab.

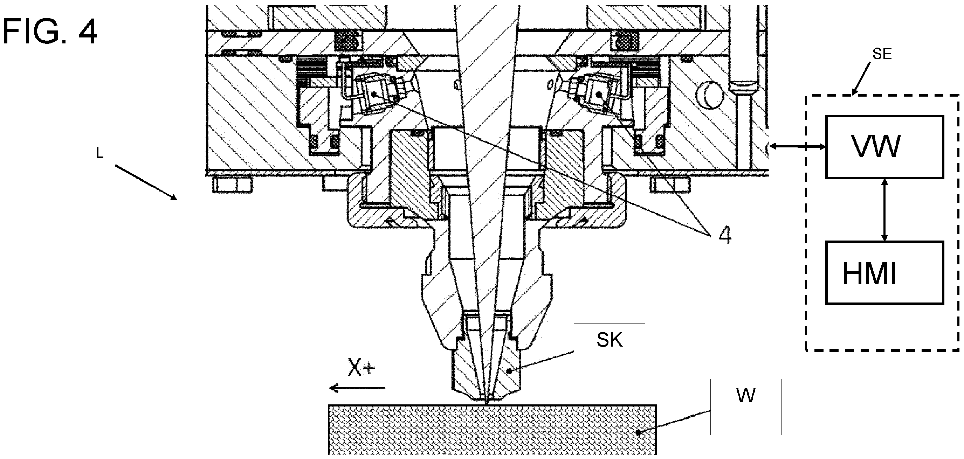

**Fig. 4** zeigt in einer Übersichtsfigur einen Teil eines Laserschneidsystems mit einer Laserschneidmaschine L, einem Vorschlagswerkzeug VW und einer Benutzerschnittstelle HMI. Die Laserschneidmaschine L dient zum Schneiden oder Bearbeiten (z.B. Gravieren) von vorzugsweise flächigen Werkstücken W, z.B. aus Metall. Dazu weist die Laserschneidmaschine L einen Schneidkopf SK auf, der in Vorschubrichtung (hier: Pfeil gekennzeichnet mit X+) über das Werkstück W bewegt wird. Die Laserschneidmaschine L kann optische Erfassungseinrichtungen und insbesondere Kameras 4 aufweisen zur Detektion von Prozesssignalen. Das Vorschlagswerkzeug VW kann entweder direkt eine Mensch-Maschine-Schnittstelle HMI aufweisen oder zumindest temporär mit einer solchen gekoppelt sein. Über die HMI können beispielsweise Werte für die Basisbearbeitungsparameter des Basismakros eingegeben werden und die von dem DNN ermittelten Werte für die Bearbeitungsparameter der anderen Makros ausgegeben werden. Die vorstehend genannte Bauteile VW, HMI können optional auch in einer Steuereinheit SE integriert sein. Dies ist in Fig. 4 gestrichelt dargestellt, da es eine Variante ist.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die nachstehenden Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für bestimmte Schneidaufgaben angewendet werden kann, sondern auch für andere Bearbeitungen mit dem Laserbearbeitungsgerät, wie z.B. ein Gravieren, Anschneiden etc. Des Weiteren können die Bauteile des Vorschlagswerkzeugs VW auf mehreren physikalischen Produkten (z.B. Steuereinheiten) verteilt realisiert werden.

## Patentansprüche

1. Computer-implementiertes Verfahren zur Bestimmung von einer Menge von Bearbeitungsparametern zum Schneiden eines Werkstücks mit einer Laserbearbeitungsmaschine (L), mit folgenden Schritten:
- Bereitstellen (S1) einer Menge von Makros, die für unterschiedliche Segmente der zu schneidenden Kontur und/oder für unterschiedliche Betriebsarten der Laserbearbeitungsmaschine (L) eine Menge von aufeinander abgestimmten Bearbeitungsparametern definieren;
- Auszeichnen (S2) eines Basismakros aus der bereitgestellten Menge von Makros, wobei sich das Basismakro **dadurch kennzeichnet, dass** mittels einer ersten Funktion (S3) eine Menge von Werten von Basisbearbeitungsparametern bestimmt wurden;
- Erfassen (S4) der bestimmten Menge von Werten der Basisbearbeitungsparameter des Basismakros;
- Anwenden (S6) eines trainierten DNN, um zu der erfassten bestimmten Menge von Werten der Basisbearbeitungsparameter des Basismakros als Ergebnis eine Menge von Werten der Bearbeitungsparameter für zumindest ein weiteres Makro aus der Menge der Makros zu ermitteln.

2. Verfahren nach Anspruch 1, bei dem die Bearbeitungsparameter des Basismakros mit den Bearbeitungsparametern des zumindest einen weiteren Makros übereinstimmen.

3. Verfahren nach einem der vorangehenden Ansprüche, bei dem die Bearbeitungsparameter des zumindest einen weiteren Makros eine Teilmenge der Bearbeitungsparameter des Basismakros sind.

4. Verfahren nach einem der vorangehenden Ansprüche, bei dem die Bearbeitungsparameter und/oder die Basisbearbeitungsparameter materialbezogene und/oder laserbearbeitungsmaschinenbezogenen Parameter umfassen und/oder ausgewählt sind aus der Gruppe, bestehend aus: Materialdicke, Materialtyp, Düsenart, Düsendurchmesser, Gasart, Düsenabstand, Magnifikation/Raster, Pulsfrequenz, Pulsbreite, Fokuslage, Gasdruck, Vorschub und Laserleistung.

5. Verfahren nach einem der vorangehenden Ansprüche, bei dem durch Anwenden der ersten Funktion (S3), mehr als ein Wert für mehr als einen Basisbearbeitungsparameter bestimmt wird und, bei dem Inkonsistenzen zwischen den bestimmten Werten der Basisbearbeitungsparameter automatisch detektiert und optional auf einer Benutzeroberfläche (HMI) repräsentiert werden.

6. Verfahren nach einem der vorangehenden Verfahrensansprüche, bei dem die als Ergebnis der Anwendung des DNN ermittelte Menge von Werten der Bearbeitungsparameter für zumindest ein weiteres Makro mit einem Konsistenzprüfalgorithmus auf Konsistenz geprüft werden und/oder bei dem etwaige Inkonsistenzen zwischen den Werten der Bearbeitungsparameter für das zumindest ein weiteres Makro automatisch detektiert und optional auf einer Benutzeroberfläche (HMI) repräsentiert werden.

7. Verfahren nach einem der vorangehenden Verfahrensansprüche, bei dem die erste Funktion (S3) ein automatisches Parametertuning, ein datengetriebenes Verfahren, ein Erfassen von Eingaben auf einer HMI und/oder ein Anwenden eines physikalischen Modells umfasst.

8. Verfahren nach einem der vorangehenden Verfahrensansprüche, bei dem das DNN ein feed forward DNN ist, das zur Lösung eines Regressionsproblems mit mindestens zwei Ausgangsvariablen bestimmt ist.

9. Verfahren nach einem der vorangehenden Verfahrensansprüche, bei dem das Auszeichnen des Basismakros in Abhängigkeit von einer Konturgröße, insbesondere eines Krümmungsradius, und/oder einer Materialart und/oder einer Materialdicke erfolgt und/oder bei dem das Auszeichnen vollautomatisch erfolgt.

10. Verfahren nach einem der vorangehenden Verfahrensansprüche, bei dem die bereitgestellte Menge von Makros folgende Makros beinhaltet:
- Ein Basismakro für Segmente der Kontur, die überwiegend einen Geradeausschnitt oder große Radien umfassen und mit kontinuierlicher Laserleistung abgefahren werden;
- Ein erstes Makro für Segmente der Kontur, die überwiegend mittlere bis kleine Radien umfassen und/oder
- Ein zweites Makro, insbesondere ein Pulsmakro, für Segmente der Kontur, die kleinste Radien umfassen und/oder mit gepulster Laserleistung abgefahren werden, damit Verbrennungen vermieden werden.

11. Vorschlagswerkzeug (VW) zur Bestimmung von einer Menge von Bearbeitungsparametern zum Schneiden eines Werkstücks mit einer Laserbearbeitungsmaschine (L) gemäß einem der vorangehenden Verfahrensansprüche, mit folgenden Bauteilen:
- Einer Schnittstelle (ES) zu einem Speicher (MEM), in dem eine Menge von Makros bereitgestellt oder definiert sind, die für unterschiedliche Segmente der zu schneidenden Kontur und/oder für unterschiedliche Betriebsarten der Laserbearbeitungsmaschine (L) eine Menge von aufeinander abgestimmten Bearbeitungsparametern definieren;
- Einem Bestimmungsmodul (BM), das ausgebildet ist zum Auszeichnen eines Basismakros aus der bereitgestellten Menge von Makros, wobei in dem Basismakro eine Menge von Werten von Basisbearbeitungsparametern bestimmt wurde, wobei die Bestimmung von Werten von Basisbearbeitungsparametern mittels einem Funktionsbaustein (FB) erfolgt, in dem eine erste Funktion implementiert ist;
- Einem Prozessor (P), der zum Erfassen der bestimmten Menge von Werten der Basisbearbeitungsparameter des Basismakros bestimmt ist;
- wobei der Prozessor (P) ausgebildet ist, ein trainiertes DNN anzuwenden, um zu der erfassten bestimmten Menge von Werten der Basisbearbeitungsparameter des Basismakros als Ergebnis eine Menge von Werten der Bearbeitungsparameter für zumindest ein weiteres Makro aus der Menge von Makros zu ermitteln.

12. Vorschlagswerkzeug (VW) nach Anspruch 11, das zusätzliche eine Ausgabeschnittstelle (AS) umfasst, die zur Ausgabe des Ergebnisses mit der Menge von Werten der Bearbeitungsparameter für zumindest ein weiteres Makro dient.

13. Laserschneidsystem mit einer Laserbearbeitungsmaschine (L), insbesondere einer Laserschneidmaschine, und einem Vorschlagswerkzeug (VW) gemäß dem unmittelbar vorangehenden Anspruch.

14. Computerprogramm, umfassend Befehle, die bei der Ausführung des Computerprogramms durch einen Computer diesen veranlassen, das Verfahren gemäß einem der vorangehenden Verfahrensansprüche auszuführen.
